# EUROPEAN PATENT SPECIFICATION

(11) **EP 4 325 114 B1**
(45) Date of publication and mention of the grant of the patent: **28.10.2026**
(21) Application number: 22190404.8
(22) Date of filing: 15.08.2022
(51) Int. Cl.: F21S 41/24, F21S 43/237, F21S 43/251, B60Q 3/62, B60Q 3/64, B60Q 3/66, F21S 43/14, F21S 43/241

(54) **ILLUMINATION DEVICE FOR AN INTERIOR OR EXTERIOR PART OF A VEHICLE, INTERIOR OR EXTERIOR PART COMPRISING SUCH AN ILLUMINATION DEVICE AND VEHICLE HAVING SUCH AN ILLUMINATION DEVICE AND/OR SUCH AN INTERIOR OR EXTERIOR PART**
BELEUCHTUNGSVORRICHTUNG FÜR EIN INNEN- ODER AUSSENTEIL EINES FAHRZEUGS, INNEN- ODER AUSSENTEIL MIT EINER SOLCHEN BELEUCHTUNGSVORRICHTUNG UND FAHRZEUG MIT EINER SOLCHEN BELEUCHTUNGSVORRICHTUNG UND/ODER EINEM SOLCHEN INNEN- ODER AUSSENTEIL
DISPOSITIF D'ÉCLAIRAGE D'UNE PARTIE INTÉRIEURE OU EXTÉRIEURE D'UN VÉHICULE, PARTIE INTÉRIEURE OU EXTÉRIEURE COMPRENANT UN TEL DISPOSITIF D'ÉCLAIRAGE ET VÉHICULE COMPORTANT UN TEL DISPOSITIF D'ÉCLAIRAGE ET/OU UNE TELLE PARTIE INTÉRIEURE OU EXTÉRIEURE

(43) Date of publication of application: 21.02.2024
(73) Proprietor: Motherson Innovations Company Limited, London E14 5HU (GB)
(72) Inventor: SEHN, Fabian, 79100 Freiburg (DE); DREYER, Xavier, 67100 Strasbourg (FR)
(74) Representative: Westphal, Mussgnug & Partner Patentanwälte mbB

(56) References cited:
- EP-A2- 0 595 338
- DE-A1- 102005 038 830
- DE-A1- 102017 107 630
- DE-A1- 102017 209 006
- DE-A1- 102020 108 869
- DE-A1- 3 319 179
- DE-B4- 102015 103 850
- DE-B4- 102017 213 988
- DE-U1- 202009 011 238
- DE-U1- 202021 100 263
- US-A1- 2003 231 503
- US-B1- 10 222 529
- US-B2- 10 746 913

## Description

The present invention relates to an illumination device for an interior or exterior part of a vehicle, to an interior or exterior part comprising such an illumination device and to a vehicle having such an illumination device and/or having such an interior or exterior part.

Ambient lighting is a key feature of modern vehicles by which the appearance of a passenger compartment can be set individually. Lighting the passenger compartment is becoming an important part of the design leading to an increase of the passenger comfort. The illumination devices providing the lighting can be arranged in manifold locations of interior parts of modern vehicles that are visible from the passenger compartment. Examples of such interior parts are instrument panels, door panels, center consoles, headliner and vehicle seats.

The respective layout of illuminated interior or exterior parts comprises an illumination body that is visible especially from the passenger compartment. At least one light source, typically embodied as a light emitting diode (LED), is arranged at distance from the illumination body. The light provided by the light source is transmitted to the illumination body by light guides. The light guides couple the light into the illumination body.

Further information on illumination devices can be found in US 10 222 529 B1, EP 0 595 338 A2, DE 33 19 179A1, US 2003 0231503 A1, DE 10 2005 038 830 A1 and DE 10 2017 107 630 A1.

DE 10 2005 029 363 A1, DE 10 2020 108 869 A1, DE 10 2017 213 988 B4, DE 10 2017 209 006 A1, DE 10 2015 103 850 B4, DE 10 2021 100 263 U1 and DE 10 2009 011 238 U1 are mentioned as further prior art.

Usually, the light guides are fastened to the illumination body and comprise light coupling elements by which the light guides can be mechanically connected to the light source in such a way that the emitted light is coupled into the light guide. Insofar the coupling elements also provide a light coupling between the light source and the light guides.

The light guides have a cable or rope like shape and are usually thin, long and flexible. They need to have a certain length to bridge the distance between the illumination body and the light source. As noted, the light source may be located at distance from the illumination body. Depending on the installation situation the distance may be comparatively large. The light guide length thus needs to be chosen accordingly. The bigger the light guide length the more complicated the handling in production, in particular as they may get caught in components of the interior or exterior part or other objects like machines, tools and the like located in the vicinity of the light guides. As a remedy the light guides may be coiled during the production process of the interior or exterior part, however, they may still form an obstacle for fixation points and the like or may even break. The production process of the interior or exterior part is thus delayed, and the rejection rate is high.

Therefore, an embodiment of the present invention has the object to provide an illumination device that improves the situation described above. In particular, the invention seeks to provide an illumination device as initially described that is easier to handle during the production process of the interior or exterior part.

The task is solved by the features specified in claims 1, 9 and 10. Advantageous embodiments are the subject of the dependent claims.

An embodiment of the invention is directed to an illumination device for an interior or exterior part of a vehicle, comprising
- a plurality of light sources for providing light,
- an illumination body mountable to the interior or exterior part for illuminating the same,
- a plurality of guides for guiding the light from the light source into the illumination body, wherein
- each of the light guides comprises a first section connected to the light source such that light provided by the same is introduced into the first section and a second section connected to the illumination body, wherein the first section and the second section are mechanically coupled to each other by a coupling element.

According to the present invention the light guides comprise at least two sections that are coupled to each other. The second section is usually fastened to the illumination body while the first section is coupled to the second section and the light source at an appropriate time of the production process. For coupling, appropriate coupling elements may be employed which mechanically couple the first section and the second section but at the same time provide a light coupling such that light can be transmitted from the first section to the second section and vice versa. It is thus possible to handle the illumination device with the second section only during a plurality of production steps, in particular during the mounting of the illumination body to the interior or exterior part. As the length of the second section can be significantly smaller compared to the light guide length, the handling during production is facilitated and the risk that the first light guide gets caught in neighboring objects is reduced. Moreover, the access to fixation points is improved, thereby accelerating the production process.

According to the invention, the first section has a first length and the second section has a second length, wherein the second length and the first length are different, namely wherein the second length is shorter than the first length. As noted the second section is typically fixedly mounted to the illumination body. Consequently, the risk that the second section gets caught in neighboring objects and is damaged is larger compared to the respective risk of the first section. The smaller the second length the easier the handling and the lower the respective risk.

In another embodiment at least one intermediate section is arranged between the first section and the second section. As noted, the light guide according to the invention comprises at least two sections. However, it may be expedient to provide at least one further section. At least one intermediate section may be beneficial in case the light source is located at a comparatively long distance from the illumination body. The length of the sections can be kept low, thereby in particular preventing the risk that the sections get caught in adjacently arranged elements.

In a further embodiment the illumination device comprises at least two light guides having the same light guide length. In this embodiment the total light guide length of the at least two light guides are the same. In case the light guide comprises the first section and the second section, the light guide length is approximately the sum of the first length and the second length. In case the light guide also comprises intermediate sections, their intermediate length has to be added. This does not necessarily mean that the first lengths of the first sections and/or the second lengths of the second sections are equal. However, the fact that the light guide length is the same the manufacturing process of the light guide can be facilitated as only one total light guide length has to be considered.

According to another embodiment the first sections have the same first length and/or the second sections have the same second length. In this embodiment the manufacturing process can be further facilitated as all the first sections have the same first lengths and all the second sections have the same second lengths. All light guides have the same layout. There is no need to further differentiate between different light guides. However, it is noted that the first length and the second length may be different.

According to a further embodiment the light intensity and/or color of the light provided by the light source is adjustable.

Such a light source increases the freedom of design of the illumination device. In case the light intensity of the light provided by the light source is adjustable it is possible to compensate light losses occurring due to long length of the light guide or due to the coupling of the first section and the second section. Further, an adjustable light intensity provides the possibility to stronger illuminate certain parts of the illumination body than other parts or to adjust the illumination of the part dependent of certain facts like for example brightness of daylight or in case losses along two different light guides are different to compensate. In case of providing a light source comprising the possibility to adjust the color allows to provide dynamic color mixing effects.

According to another embodiment the light guide comprises at least one multiple coupling element by which
- at least two first sections are couplable with one second section or one intermediate section, or
- at least two second sections are couplable with one first section or one intermediate section.

The multiple coupling element enables either to merge the light provided by two or more light sources into one second section or to split the light provided by one light source into two or more second sections. Such multiple light sources increase the freedom of design of the illumination device. Merging the light of two different light sources into one second section provides the possibility to stronger illuminate certain parts of the illumination body than other parts. Moreover, in case the light guide length is very large, the light loss may be comparatively high. This light loss may be reduced by using two or more light sources. The light sources may also provide light of different colors. A given part of the illumination body may be illuminated in different colors. Dynamic color mixing effects may be provided. Splitting the light of a given light source into two or more second sections reduces the number of light sources.

According to a further embodiment the first section and/or the second section
- have a reflective inner surface, or
- consist of one or more optical fibers.

In case the first section and/or the second section have a reflective inner surface, it is possible to use plastic as a material for the light guide. The use of plastic may be beneficial in particular when the light guide has to be bent to a large degree which could be detrimental to optical fibers in particular made of glass. However, the use of optical fibers made of glass may also be beneficial as the light yield may be higher compared to light guides made of plastic.

In a further embodiment the illumination body is formed by or comprises a textile fabric having a plurality of warp yarns and a plurality of weft yarns, the warp yarns and/or the weft yarns being embodied as optical fibers. Textile fabrics may have a very thin height and can thus be incorporated into many parts, especially interior parts, of the vehicle. Moreover, as they are flexible, they may be part of vehicle seats such that also the vehicle seats can be provided with a background illumination. Beyond that, the flexible fabrics may follow the curvature of the interior part facilitating the mounting to the same.

Another implementation of the invention is directed to an interior or exterior part for a vehicle, comprising an illumination device according to one of the embodiments previously described. Another embodiment of the invention is directed to a vehicle comprising at least one interior or exterior part according to one of the embodiments previously described and/or at least one illumination device according to one of the embodiments previously described.

The technical effects and advantages as discussed with regard to the present illumination device equally apply to the interior or exterior part and the vehicle. Briefly, the handling of the illumination device when mounted to the interior or exterior part is facilitated and accelerated. At the same time the rejection rate of such interior or exterior parts can be reduced. Thus the production costs can be kept low.

The present invention is described in detail with reference to the drawings attached wherein
- Figure 1A: is a principle top view of an interior part of a vehicle,
- Figure 1B: is a principle side view of the interior part shown in Figure 1A,
- Figure 1C: is a principle sectional view through a light guide along the section plane defined in Figure 1A showing a first embodiment of the light guide,
- Figure 1D: is a principle sectional view through a light guide along the section plane defined in Figure 1A showing a second embodiment of the light guide,
- Figure 1E: is a principle sectional view through a light guide along the section plane defined in Figure 1A showing a third embodiment of the light guide, and
- Figure 2: is a principle top view of a vehicle comprising a plurality of interior parts shown in Figures 1A and 1B.

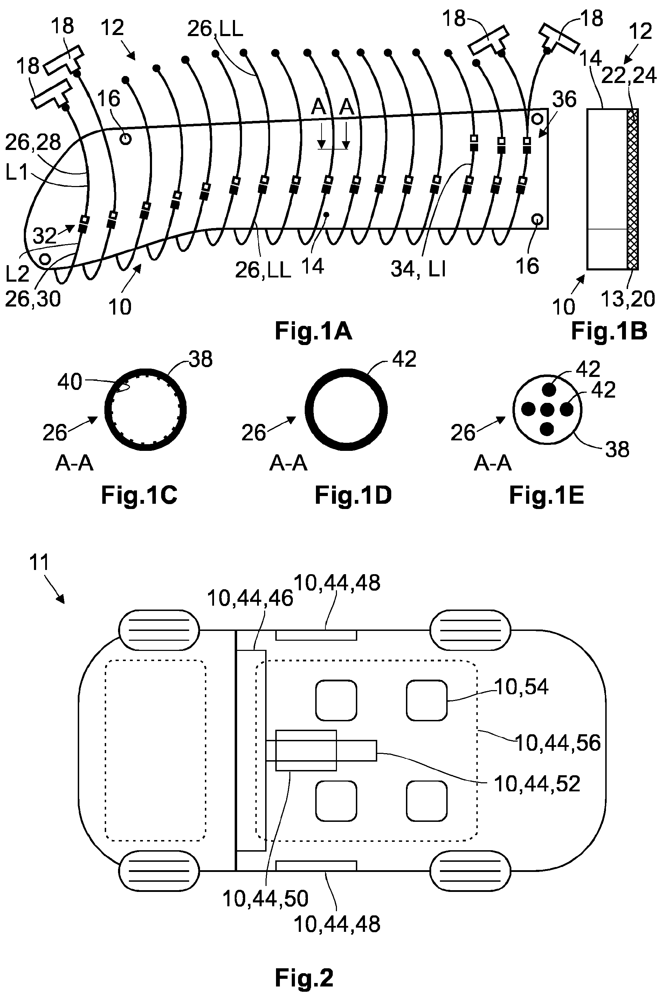

Figures 1A and 1B show an embodiment of an interior part 10 of a vehicle 11 (see also Figure 2) comprising an illumination device 12 according to the present invention. Although the embodiment is described as an interior part 10, the invention is not restricted to interior parts but can be included in exterior parts as well. The illumination device 12 comprises an illumination body 13 which provides a background illumination of the respective interior part 10, and which is further described later on. The interior part 10 comprises a carrier body 14 on which the illumination device 12 is fixed, e.g., by gluing, screwing or other appropriate fixing means. In the embodiment shown the carrier body 14 comprises several fixing points 16 at which the illumination body 13 can be positioned or fastened to the carrier body 14. Referring to Figure 1A the illumination body 13 is mounted on the back side of the carrier body 14 and is thus not visible in Figure 1A.

The illumination device 12 comprises a plurality of light sources 18 that provide light of a given wavelength or wavelength range, brightness and color. The light sources 18 may be embodied as LEDs. Wavelength or wavelength range, brightness and/or color of the light source 18 may be adjustable, for example by use of multicolor LEDs. In the embodiment shown the illumination body 13 is formed by a textile fabric 20 comprising a plurality of warp yarns 22 and weft yarns 24. Thus, the illumination body 13 is flexible and can follow curvatures of the carrier body 13 of the interior part 10.

The light provided by the light source 18 is guided to the illumination body 13 by means of a light guide 26. It is noted that for the sake of clarity the light guides 26 are not shown in Figure 1B. The illumination body 13 may form a part of the surface visible to a passenger of the vehicle 11 or may be covered by a transparent or translucent cover layer (not shown). The light guided to the illumination body 13 is distributed inside the illumination body 13 and leaves the illumination body 13. The light leaving the illumination body 13 is perceivable by the passenger of the vehicle 11 who perceives the illumination body 13 and thus the interior part 10 as an illuminated surface.

Each of the light guides 26 comprises a first section 28 and a second section 30. The first section 28 is connected to the light source 18 such that light provided by the same is introduced into the first section 28. The first section 28 is coupled to the second section 30 by a coupling element 32. The coupling element 32 provides a mechanical coupling between the first section 28 and the second section 30 but at the same time also provides a light coupling such that light can be transmitted from the first section 28 to the second section 30 and vice versa.

On the right-hand side of Figure 1A light guides 26 are shown that comprise not only a first section 28 and a second section 30 but also an intermediate section 34 arranged between the first section 28 and the second section 30. The intermediate section 34 is also coupled to the first section 28 and the second section 30 by appropriate coupling elements 32. The intermediate section 34 has an intermediate length LI.

The first section 28 has a first length L1 and the second section 30 has a second length L2. The entire light guide 26 has a light guide length LL. In the embodiment shown the first length L1 is bigger than the second length L2. In case the light guide 26 comprises the first section 28 and the second section 30 only the light guide length LL is approximately the sum of the first length L1 and the second length L2. In case the light guide 26 comprises one or more intermediate sections 34, their intermediate length LI has to be added to estimate the light guide length LL.

In the embodiment shown some of the light guides 26 have the same light guide length LL whereas other light guides 26 have a different light guide length LL. Moreover, the first length L1 of the first section 28 may be the same in all the light guides 26 but can also vary. The same applies to the second length L2 of the second section 30 and the intermediate length LI of the intermediate sections 34.

The light guide 26 shown on the very right-hand side of Figure 1A comprises a multiple coupling element 36 by which the light of two first sections 28 can be introduced into one second section 30 (not shown) or as shown, into one intermediate section 34. As a result, the respective area of the illumination body 13 can be illuminated by the light provided by two light sources 18. As an example, this area may be illuminated with an increased brightness and/or different colors compared to other areas. Brightness and color may be changed dynamically by a respective activation of the two light sources 18.

Such a multiple coupling element 36 can also be used to split the light provided by one light source 18 into two second sections 30 (not shown). This may be beneficial when the number of light sources 18 should be kept low.

Figures 1C to 1E show different implementations of the light guides 26 and of the respective first sections 28 and second sections 30. In Figure 1C the light guide 26 has a shell 38 with a reflective inner surface 40. The light coupled into the light guide 26 is reflected by the inner surface 40 and thus transmitted through the light guide 26. In Figure 1D the light guide 26 is embodied as one single optical fiber 42, e.g., a glass fiber. In Figure 1E the light guide 26 comprises a plurality of optical fibers 42, in this case five optical fibers 42 that are surrounded by a shell 38. The number of optical fibers 42, which may also be embodied as glass fibers, can be varied according to the intended use.

As can be seen from Figure 1A the completely mounted light guide 26 may hinder the access to the fixing points 16. In contrast to that, the second sections 30 as such do not reach the upper fixing points 16 and thus do not hinder the access at least to the upper fixing points 16. During the production process the first section 28 and the second section 30 are coupled as late as possible and preferably after the illumination body 13 is completely mounted to the carrier body 14. Hereby the handling of the illumination device 12 and the mounting of the interior part 10 are facilitated.

Figure 2 shows a vehicle 11 by means of a principle top view, the vehicle 11 comprising several interior parts 10 according to the present invention. The interior parts 10 of the vehicle 11 shown in Figure 2 may be embodied as an interior trim part 44 such as an instrument panel 46, a door panel 48, a center console 50, an overhead console 52, and headliners 56. Moreover, the interior parts 10 may be embodied as vehicle seats 54.

### Reference list

- 10: interior part
- 11: vehicle
- 12: illumination device
- 13: illumination body
- 14: carrier body
- 16: fixing point
- 18: light source
- 20: textile fabric
- 22: warp yarn
- 24: weft yarn
- 26: light guide
- 28: first section
- 30: second section
- 32: coupling element
- 34: intermediate section
- 36: multiple coupling element
- 38: shell
- 40: inner surface
- 42: optical fiber
- 44: interior trim part
- 46: instrument panel
- 48: door panel
- 50: center console
- 52: overhead console
- 54: vehicle seat
- 56: headliner
- LI: intermediate length
- LL: light guide length
- L1: first length
- L2: second length

## Claims

1. Illumination device (12) for an interior part (10) or exterior part of a vehicle (11), comprising
- a plurality of light sources (18) for providing light,
- an illumination body (13) mountable to the interior part (10) or exterior part for illuminating the same,
- a plurality of light guides (26) for guiding the light from the light sources (18) into the illumination body (13), wherein
- each of the light guides (26) comprise a first section (28) connected to one of the light sources (18) such that light provided by the same is introduced into the first section (28) and a second section (30) connected to the illumination body (13), wherein the first section (28) and the second section (30) are mechanically coupled to each other by a coupling element, **characterized in that** the first section (28) has a first length (L1) and the second section (30) has a second length (L2), wherein the second length (L2) is shorter than the first length (L1).

2. Illumination device (12) according to claim 1,
**characterized in that** at least one intermediate section (34) is arranged between the first section (28) and the second section (30).

3. Illumination device (12) according to one of the preceding claims,
**characterized in that** the illumination device (12) comprises at least two light guides (26) having the same light guide length (LL).

4. Illumination device (12) according to claim 3,
**characterized in that** the first sections (28) have the same first length (L1) and/or the second sections (30) have the same second length (L2).

5. Illumination device (12) according to one of the preceding claims,
**characterized in that** the light intensity and/or color of the light provided by the light sources (18) is adjustable.

6. Illumination device (12) according to one of the preceding claims,
**characterized in that** the light guides (26) comprise at least one multiple coupling element (36) by which
- at least two first sections (28) are coupled with one second section (30) or one intermediate section (34), the intermediate section is arranged between the first section (28) and the second section (30), or
- at least two second sections (30) are coupled with one first section (28) or one intermediate section (34), the intermediate section is arranged between the first section (28) and the second section (30).

7. Illumination device (12) according to one of the preceding claims,
**characterized in that** the first section (28) and/or the second section (30)
- have a reflective inner surface (40), or
- consist of one or more optical fibers (42).

8. Illumination device (12) according to one of the preceding claims,
**characterized in that** the illumination body (13) is formed by or comprises a textile fabric (20) having a plurality of warp yarns (22) and a plurality of weft yarns (24), the warp yarns (22) and/or the weft yarns (24) being embodied as optical fibers.

9. Interior part (10) or exterior part for a vehicle (11), comprising an illumination device (12) according to one of the preceding claims.

10. Vehicle (11), comprising at least one interior part (10) or exterior part according to claim 9 and/or at least one illumination device (12) according to one of the claims 1 to 8.

## Patentansprüche

1. Beleuchtungsvorrichtung (12) für ein Innenteil (10) oder ein Außenteil eines Fahrzeugs (11), die Folgendes aufweist:
- mehrere Lichtquellen (18) zum Bereitstellen von Licht,
- einen an das Innenteil (10) oder Außenteil montierbaren Beleuchtungskörper (13) zum Beleuchten desselben,
- mehrere Lichtleiter (26) zum Leiten des Lichts von den Lichtquellen (18) in den Beleuchtungskörper (13), wobei
- jeder der Lichtleiter (26) Folgendes aufweist: einen ersten Abschnitt (28), der mit einer der Lichtquellen (18) verbunden ist, so dass Licht, das durch diese bereitgestellt wird, in den ersten Abschnitt (28) eingeleitet wird, und einen zweiten Abschnitt (30), der mit dem Beleuchtungskörper (13) verbunden ist, wobei der erste Abschnitt (28) und der zweite Abschnitt (30) durch ein Kopplungselement mechanisch miteinander gekoppelt sind, **dadurch gekennzeichnet, dass** der erste Abschnitt (28) eine erste Länge (L1) aufweist und der zweite Abschnitt (30) eine zweite Länge (L2) aufweist, wobei die zweite Länge (L2) kürzer als die erste Länge (L1) ist.

2. Beleuchtungsvorrichtung (12) nach Anspruch 1, **dadurch gekennzeichnet, dass** zwischen dem ersten Abschnitt (28) und dem zweiten Abschnitt (30) zumindest ein Zwischenabschnitt (34) angeordnet ist.

3. Beleuchtungsvorrichtung (12) nach einem der vorstehenden Ansprüche,
**dadurch gekennzeichnet, dass** die Beleuchtungsvorrichtung (12) zumindest zwei Lichtleiter (26) mit derselben Lichtleiterlänge (LL) aufweist.

4. Beleuchtungsvorrichtung (12) nach Anspruch 3,
**dadurch gekennzeichnet, dass** die ersten Abschnitte (28) dieselbe erste Länge (L1) aufweisen und/oder die zweiten Abschnitte (30) dieselbe zweite Länge (L2) aufweisen.

5. Beleuchtungsvorrichtung (12) nach einem der vorstehenden Ansprüche,
**dadurch gekennzeichnet, dass** die Lichtintensität und/oder Farbe des durch die Lichtquellen (18) gelieferten Lichts einstellbar ist.

6. Beleuchtungsvorrichtung (12) nach einem der vorstehenden Ansprüche,
**dadurch gekennzeichnet, dass** die Lichtleiter (26) zumindest ein Mehrfachkopplungselement (36) aufweisen, durch das
- zumindest zwei erste Abschnitte (28) mit einem zweiten Abschnitt (30) oder einem Zwischenabschnitt (34) gekoppelt sind, wobei der Zwischenabschnitt zwischen dem ersten Abschnitt (28) und dem zweiten Abschnitt (30) angeordnet ist, oder
- zumindest zwei zweite Abschnitte (30) mit einem ersten Abschnitt (28) oder einem Zwischenabschnitt (34) gekoppelt sind, wobei der Zwischenabschnitt zwischen dem ersten Abschnitt (28) und dem zweiten Abschnitt (30) angeordnet ist.

7. Beleuchtungsvorrichtung (12) nach einem der vorstehenden Ansprüche,
**dadurch gekennzeichnet, dass** der erste Abschnitt (28) und/oder der zweite Abschnitt (30)
- eine reflektierende innere Oberfläche (40) aufweisen, oder
- aus einer oder mehr optischen Fasern (42) bestehen.

8. Beleuchtungsvorrichtung (12) nach einem der vorstehenden Ansprüche,
**dadurch gekennzeichnet, dass** der Beleuchtungskörper (13) durch ein Textilgewebe (20) mit mehreren Kettfäden (22) und mehreren Schussfäden (24) gebildet wird oder solches aufweist, wobei die Kettfäden (22) und/oder die Schussfäden (24) als optische Fasern verkörpert sind.

9. Innenteil (10) oder Außenteil für ein Fahrzeug (11), das eine Beleuchtungsvorrichtung (12) gemäß einem der vorstehenden Ansprüche aufweist.

10. Fahrzeug (11), das zumindest ein Innenteil (10) oder Außenteil gemäß Anspruch 9 und/oder zumindest eine Beleuchtungsvorrichtung (12) gemäß einem der Ansprüche 1 bis 8 aufweist.

## Revendications

1. Dispositif (12) d'éclairage d'une partie (10) intérieure ou d'une partie extérieure d'un véhicule (11), comprenant
- une pluralité de sources (18) lumineuses pour donner de la lumière,
- un corps (13) d'éclairage pouvant être monté sur la partie (10) intérieure ou la partie extérieure pour l'éclairer,
- une pluralité de guides (26) de lumière pour guider la lumière des sources (18) lumineuses au corps (13) d'éclairage, dans lequel
- chacun des guides (26) de lumière comprend un premier tronçon (28) relié à l'une des sources (18) lumineuses de manière à ce que de la lumière qu'elle donne soit introduite dans le premier tronçon (28) et un deuxième tronçon (30) relié au corps (13) d'éclairage, dans lequel le premier tronçon (28) et le deuxième tronçon (30) sont accouplés mécaniquement l'un à l'autre par un élément d'accouplement, **caractérisé en ce que** le premier tronçon (28) a une première longueur (L1) et le deuxième tronçon (30) a une deuxième longueur (L2), dans lequel la deuxième longueur (L2) est plus courte que la première longueur (L1).

2. Dispositif (12) d'éclairage suivant la revendication 1, **caractérisé en ce qu'**au moins un tronçon (34) intermédiaire est disposé entre le premier tronçon (28) et le deuxième tronçon (30).

3. Dispositif (12) d'éclairage suivant l'une des revendications précédentes,
**caractérisé en ce que** le dispositif (12) d'éclairage comprend au moins deux guides (26) de lumière ayant la même longueur (LL) de guide de lumière.

4. Dispositif (12) d'éclairage suivant la revendication 3,
**caractérisé en ce que** les premiers tronçons (28) ont la même première longueur (L1) et/ou les deuxièmes tronçons (30) ont la même deuxième longueur (L2).

5. Dispositif (12) d'éclairage suivant l'une des revendications précédentes,
**caractérisé en ce que** l'intensité lumineuse et/ou la couleur de la lumière donnée par les sources (18) lumineuses est réglable.

6. Dispositif (12) d'éclairage suivant l'une des revendications précédentes,
**caractérisé en ce que** les guides (26) de lumière comprennent au moins un élément (36) d'accouplement multiple, par lequel
- au moins deux premiers tronçons (28) sont accouplés à un seul deuxième tronçon (30) ou à un seul tronçon (34) intermédiaire, le tronçon intermédiaire étant disposé entre le premier tronçon (28) et le deuxième tronçon (30), ou
- au moins deux deuxièmes tronçons (30) sont accouplés à un seul premier tronçon (28) ou à un seul tronçon (34) intermédiaire, le tronçon intermédiaire étant disposé entre le premier tronçon (28) et le deuxième tronçon (30).

7. Dispositif (12) d'éclairage suivant l'une des revendications précédentes, .
**caractérisé en ce que** le premier tronçon (28) et/ou le deuxième tronçon (30)
- ont une surface (40) intérieure de réflexion ou
- consiste en une ou en plusieurs fibres (42) optiques.

8. Dispositif (12) d'éclairage suivant l'une des revendications précédentes,
**caractérisé en ce que** le corps (13) d'éclairage est formé ou comprend un tissu (20) textile ayant une pluralité de fils (22) de chaîne et une pluralité de fils (24) de trame, les fils (22) de chaîne et/ou les fils (24) de trame étant réalisés en fibres optiques.

9. Partie (10) intérieure ou partie extérieure d'un véhicule (11), comprenant un dispositif (12) d'éclairage suivant l'une des revendications précédentes.

10. Véhicule (11), comprenant au moins une partie (10) intérieure ou une partie extérieure suivant la revendication 9 et/ou au moins un dispositif (12) d'éclairage suivant l'une des revendications 1 à 8.
